# EUROPEAN PATENT SPECIFICATION

(11) **EP 1 798 550 B1**
(45) Date of publication and mention of the grant of the patent: **25.07.2018**
(21) Application number: 06025795.3
(22) Date of filing: 13.12.2006
(51) Int. Cl.: G01N 29/265, G01N 27/90

(54) **DEVICE FOR INSPECTING THE INTERIOR OF A MATERIAL**
VORRICHTUNG ZUR PRÜFUNG DES INNEREN EINES MATERIALS
DISPOSITIF POUR INSPECTER L'INTÉRIEUR D'UN MATÉRIAU

(30) Priority: 13.12.2005 NL 1030660
(43) Date of publication of application: 20.06.2007
(73) Proprietor: Lothgenoten B.V., 7864 TG Zwinderen (NL)
(72) Inventor: Loth, Karel Auguste, 7864 TG Zwinderen (NL)
(74) Representative: Bartelds, Erik

(56) References cited:
- DE-A1- 3 614 002
- JP-A- S6 047 958
- US-A- 4 065 976
- US-A- 4 891 972
- US-A- 5 974 889
- US-B2- 6 948 369

## Description

The invention relates to a device for inspecting the interior of a material, comprising at least one sensor which comprises an ultrasonic transducer, means for moving the at least one sensor at a substantially constant distance along a surface of the material, the moving means being adapted to cause the at least one sensor to perform a substantially uniform movement along the surface, and a chamber filled with a medium which conducts ultrasonic waves well and which is placed between the at least one sensor and the surface, wherein the chamber filled with the readily conductive medium is arranged to be held immobile on the surface, and the at least one ultrasonic transducer is movable through or along the chambercomprising of moving at least one sensor at a substantially constant distance along a surface of the material. Such an inspection device is known from US 4 065 976.

Materials or material connections, such as welds, can be inspected using ultrasonic waves or ultrasound. After activation an ultrasonic transducer then transmits an ultrasonic wave beam which penetrates into the material for inspecting, and is partially reflected again. The wave reflections are received by the ultrasonic transducer and converted into an electrical signal. Changes in the structure of the material or material transitions can be detected by analysing these signals. The ultrasonic transducer thus has both a transmitting and a receiving function.

By displacing the ultrasonic wave beam in controlled manner over a determined surface the material for inspecting can be inspected in a particular area. When a determined surface or area is scanned by the ultrasonic wave beam and the measurement data relating to the inspected surface or area are displayed graphically, this is referred to as making a scan. A device which makes it possible to scan a determined surface or area systematically using an ultrasonic wave beam is therefore called a scanner.

A problem occurring in the ultrasonic inspection of materials or connections is that ultrasonic waves are greatly damped in the air, whereby only weak reflections are detected. Use is therefore often made for ultrasonic inspections of a bath in which the material for inspection is arranged. The medium in the bath, usually water, conducts the ultrasonic waves well, whereby strong and readily detectable reflections occur. Such inspections are however often laborious and time-consuming. The costs of a bath, which usually has to have considerable dimensions to also allow inspection of larger objects, are moreover relatively high. For many objects an ultrasonic inspection in a bath is not practically feasible at all.

An ultrasonic scanner is therefore described in US 6 948 369 A with which inspections can be carried out in the open air, so without here immersing the objects for inspecting in a bath. This known scanner, which is particularly intended for checking the quality of welded connections, is provided with an ultrasonic transducer which is arranged at the top of a reverse-conical housing. The form of the housing corresponds to the form of an ultrasonic wave beam which is transmitted by the transducer and which is focussed at a determined depth in the material for inspecting. The underside of the housing, which is intended for placing on the material for inspecting, has a cylindrical form and is provided with a collar placed therearound. This collar serves to support the scanner over a greater surface area. The space in the housing between the transducer and the underside is filled with a liquid such as water. The conical part of the space is closed with a membrane situated some distance above the surface of the material. The space between the membrane and the surface of the material is connected to a source of contact fluid, for instance water.

The scanner is connected to an element to be fixed to the material, for instance a magnet or a great weight, and is displaced manually or by means of a mechanism in a square pattern over the surface of the material for inspecting. A second transducer herein detects and transmits the displacements to a central processing unit, in which the reflections received by the first transducer are also processed and optionally displayed graphically. In this manner so-called A-scans, B-scans and/or C-scans of the welded connections can be made.

This known method has a number of drawbacks. In the first place the movement of the scanner over the material is not very uniform due to the square progression thereof. This results in a jerky movement, whereby there is the danger of the scanner coming off the material for inspecting. Carrying out the movement manually results in further unevenness. In practice it is not readily possible to manually displace such a scanner in regular manner over the surface. When use is however made of a mechanism for the movement, the costs of the installation to be used in inspection then increase sharply. In addition, the material for inspecting comes into contact with the liquid which is introduced into the space between the membrane and the collar, whereby it must be dried or cleaned after inspection.

The prior art document US 4 065 976 A discloses a mechanical scanning apparatus which includes a parallelogram linkage comprising a pair of parallel arms and parallel first and second connecting links adjacent opposite ends of the arms pivotally connected thereto. Transducer means, such as an ultrasonic transducer or transducer array, included in the ultrasonic imaging system, or the like, are attached to the first connecting link for movement therewith. The arms are pivotally mounted in a block on a base plate, which also carries a drive motor for driving the parallelogram linkage. The arms and the first connecting link with the transducer extend into a tube secured to the bottom of the base plate and filled with water. The lower end of the tube is closed by a flexible boot, which may be placed on a subject to be scanned. Operating the drive motor causes the parallelogram linkage to rock back and forth, thus moving the transducer through the water and along the flexible boot to perform linear scanning, while the device is held stationary on the subject. In an alternative embodiment a connecting link between the parallel arms about halfway their length defines a pivot. This allows the arms to be pivoted so as to provide a sector scanning motion of the transducer.

In JP 60 047958 A an inspection device is described for use in basin filled with water, in which the material to be inspected is immersed. The device includes a first truck moving in X-direction which rides on the edge of the basin. The first truck carries rails along which a second truck is movable in Y-direction. This second truck carries a rotary drive motor having a shaft which extends into the basin and carries a number of transducers. This arrangement allows the transducers to perform a spiraling movement.

The invention now has for its object to further improve an inspection device of the type described in the preamble. According to the invention, this is achieved in such an inspection device in that the moving means are adapted to cause the at least one sensor to perform a composite movement, i.e a rotation movement and a translation movement, along the surface, the moving means comprising an element rotatable about an axis, wherein the at least one sensor is arranged eccentrically relative to the axis, and the moving means further comprising a translatable element which is mounted slidably in the chamber and in which the rotatable element is accommodated.

This device reduces the risk of the position of the sensor changing relative to the material surface due to jolting, whereby the direction and distance of the wave beam could vary and the detection would become less reliable. Due to the uniform movement the acceleration forces in particular are low, whereby the device will not vibrate, or hardly so, during scanning. The device can thus be held in stable manner against the material for inspecting, whereby better measuring results can be obtained. The sensor can hereby be moved at higher speed so that the inspection requires less time and it is easier to hold the device by hand in a fixed position on the material for inspecting during this short time. The composite movement along the surface, by having the sensor perform a rotation movement and a translation movement, allows a relatively large surface area to be covered in a short time in a rapid and simple manner. The sensor hereby moves as it were in a spiral shape along the surface.

Since the readily conductive medium is arranged in the chamber that is held immobile on the surface, and the ultrasonic transducer is movable through or along the chamber, a very uniform movement of the transducer can be guaranteed. This movement is stabilized by the chamber with the conductive medium. Direct contact between the medium and the surface of the material is moreover avoided due to the chamber, so that no medium is lost and the material does not have to be dried or cleaned. Finally, it is simple in this manner to determine the position of the ultrasonic transducer relative to the material. Only the position of the transducer relative to the medium chamber has to be measured for this purpose, since this chamber does not move relative to the material for inspecting. When, in addition to the ultrasonic reflections, the position of the ultrasonic transducer is thus also determined, this information can be processed and displayed using signal and data processing equipment. A common form of presentation of these measurement data is a so-called C-scan, wherein a determined reflection pattern in a surface is displayed graphically using colours. A determined condition in or on a material, such as for instance a weld connection, can hereby be displayed as a colour indication.

When the moving means comprise a motor which drives the rotatable element and/or the translatable element via at least one transmission, the movements are combined with simple means, while the costs of the device can be low through the use of a single motor. The movements of the transducer are provided by a translatable and a rotatable element, and a structurally simple device is obtained since the translatable element is mounted slidably on the chamber.

In order to obstruct the radiation from and to the transducer as little as possible at least a wall of the chamber to be held on the surface preferably has a window permeable to ultrasonic waves. In the ultrasonic window the wall consists of a material which causes few ultrasonic reflections and thereby disrupts the reflected ultrasonic signal as little as possible. The material of the window can consist of a solid, a rubber-like material, a foil or of other materials. A minimal absorption and reflection of the ultrasonic waves is achieved when the window is a membrane.

In order to keep the reflection of the window itself as low as possible the window can enclose a non-right angle with a line connecting the at least one ultrasonic transducer and the surface. By placing the window such that the ultrasonic wave beam is not incident on the window perpendicularly but at an angle, reflections from the window, which are undesirable, can be directed such that they do not reach the ultrasonic transducer, or at least do so with less intensity. The measurement is thus disrupted as little as possible by reflections from the window.

In order to also be able to use the inspection device in the case of components which do not run flat under the device, for instance components with a bent edge, it can preferably be provided with means for deflecting waves transmitted by the at least one ultrasonic transducer. The device can thus detect a material for inspecting as it were "round the corner". These deflecting means can comprise a mirror which is placed in the chamber or can be connected thereto.

Further preferred embodiments of the inspection device according to the invention are defined in the dependent claims.

The invention is now elucidated on the basis of two embodiments, wherein reference is made to the accompanying drawing, in which corresponding components are designated with reference numerals increased in each case by 100, and in which:
Fig. 1 shows a partly cut-away perspective view of a first embodiment of the inspection device in use for detecting an internal fault in a material;
Fig. 2 shows a partly cut-away perspective view of a second embodiment of the inspection device; and
Fig. 3 shows a cross-sectional view of the embodiment of fig. 2 in use for inspecting a material with upright edge.

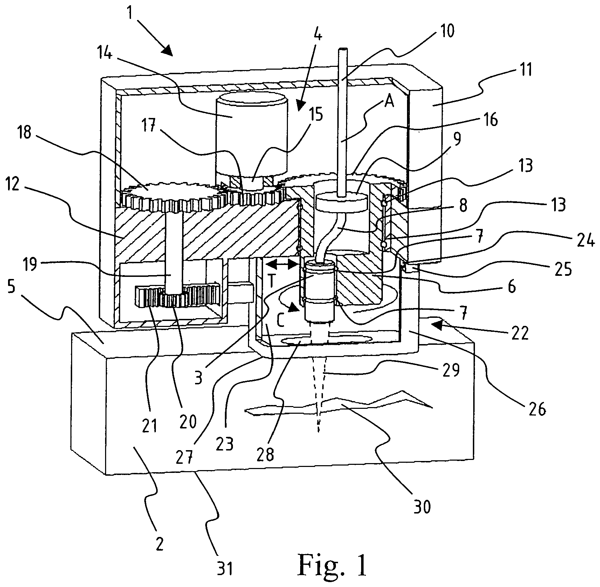

A device 1 (fig. 1) for inspecting the interior of a material 2 comprises a sensor 3, in the shown example an ultrasonic transducer, and means 4 for moving this transducer 3 at a substantially constant distance along a surface 5 of material 2. Transducer 3 transmits an ultrasonic wave beam 29 which is focussed at a determined depth in the material 2 for inspecting and also receives reflections of wave beam 29. Moving means 4 are adapted to cause transducer 3 to perform as uniform a composite movement as possible along surface 5, in this case a circular rotation movement according to arrow C and a translation movement according to arrow T.

For this purpose moving means 4 comprise firstly an element 6 which is rotatable about an axis A and in which the transducer 3 is received eccentrically relative to axis A. Transducer 3 is herein per se also rotatable in element 6 by means of bearings 7. Transducer 3 is connected via a cable 8 to a control and processing unit (not shown here). This unit is adapted to analyse the reflected ultrasonic signals, process and present them in diverse ways, as figures or graphically. The unit is also adapted to control the movements of transducer 3 and for activation thereof.

Cable 8 is placed through a cable guide 9 in rotatable element 6 and attached non-rotatably at 10 to a housing 11 enclosing moving means 4. During rotation of rotatable element 6 the cable 8 will bend between guide 9 and transducer 3. For this purpose a flexible mechanical coupling (not shown here), for instance a bellows coupling, can also be arranged between transducer 3 and cable 8. It is otherwise also possible to envisage transducer 3 being received fixedly in rotatable element 6 and a rotatable electrical connection, for instance an inductive connection or a connection with slide contacts, being arranged between transducer 3 and cable 8 or somewhere in cable 8.

In addition, moving means 4 comprise a translatable element 12 in which rotatable element 6 is received via bearings 13. This translatable element 12 here takes the form of a carriage which bears the greater part of inspection device 1, including housing 11. It is however also possible to envisage carriage 12 being accommodated slidably in housing 11, whereby this housing 11 can function as a handle.

Arranged among other parts on carriage 12 is a motor 14, which also forms part of moving means 4. This motor 14 has an output shaft 15 which drives rotatable element 6 via a first transmission. The same shaft 15 also drives translatable element 12 via a second transmission. Motor 14 or rotatable element 6 is provided with an angular displacement sensor (not shown here) for measuring the angle through which the rotatable element 6 is rotated.

The first transmission is formed simply by a toothed wheel 16 which is connected to rotatable element 6 and which engages in a toothed wheel 17 on motor shaft 15. The second transmission is formed by a toothed wheel 18 which engages in toothed wheel 17 on motor shaft 15 and which is connected via a shaft 19 to a smaller toothed wheel 20. This toothed wheel 20 co-acts with a gear rack 21 which is in turn attached to a fixed part of inspection device 1.

The fixed part of device 1 is formed by a chamber 22 filled with a medium 23 which readily conducts the ultrasonic waves of transducer 3. This medium 23 can be a liquid such as water, but a gel can also be envisaged. This chamber 22 here has a bent upper edge 24 around which an edge 25 of carriage 12 engages so that carriage 12 is mounted slidably on chamber 22. Seals (not shown here) are of course provided between carriage 12 and chamber 22 to prevent leakage of medium 23 out of chamber 22.

Chamber 22, which is thus closed on the top side by carriage 12, has a peripheral wall 26 and an end wall 27. In this end wall 27, which is placed on the surface 5 of the material 2 for inspecting, is formed a window 28 which is well permeable to the ultrasonic wave beam 29 from transducer 3. This window 28 can for instance be a membrane. In order to preclude as far as possible disruptive reflections from window 28 reaching transducer 3 the window can, as stated, enclose a non-right angle with a line L connecting transducer 3 and surface 5. Window 28 could also be given a spherical form. Window 28 is detachable, and can be replaced with another window if desired.

The above described inspection device 1 now operates as follows. Device 1 is first placed with the bottom wall 27 of medium chamber 22 onto surface 5 of a material 2 for inspecting, at a location where an irregularity is suspected, for instance a subsurface crack, or at the position of for instance a welded connection. Motor 14 is then started and transducer 3 activated. Transducer 3 will now continuously transmit an ultrasonic wave beam 29 which penetrates the material 2 through chamber 22 and window 28. When wave beam 29 encounters an irregularity 30, it is reflected. If there are no irregularities in material 2 the wave beam is reflected by the opposite surface 31. Because the propagation speed of ultrasonic wave beam 29 in material 2 is known, the depth at which the beam 29 was reflected can be determined from the time which has elapsed between transmitting and receiving of wave beam 29. This depth can be displayed graphically.

While transducer 3 transmits its wave beams 29 and receives reflections, it is set into an uniform movement relative to the stationary chamber 22 by motor 14, the transmissions, carriage 12 and rotatable element 6. This uniform movement forms a combination of a circular rotation C around axis A and a linear translation as according to arrow T. The resulting movement is thus spiral, whereby wave beam 29 can cover a relatively large surface area of material 2. The position of transducer 3 is given at every moment by the angular displacement sensor. Because the movement is very uniform and device 1 itself is held immobile, the accelerations are slight and transducer 12 can be moved very quickly. An image of the interior of material 2 is thus obtained in a short time by coupling the reflections to the positions of transducer 3.

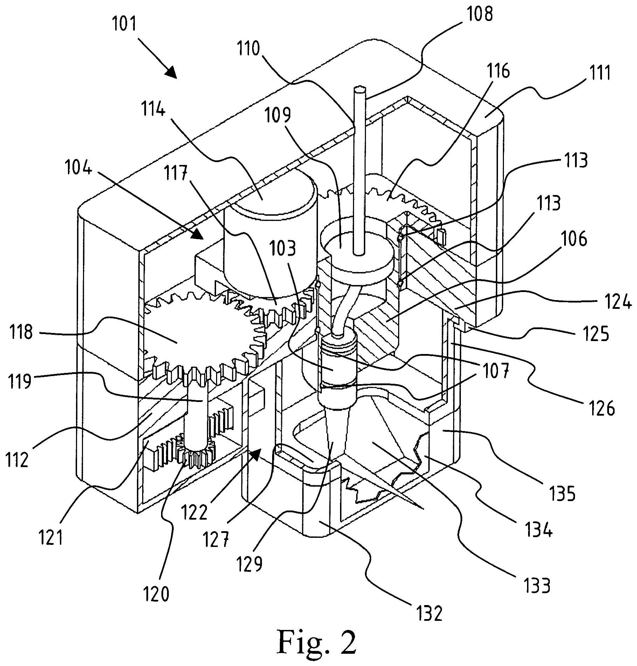

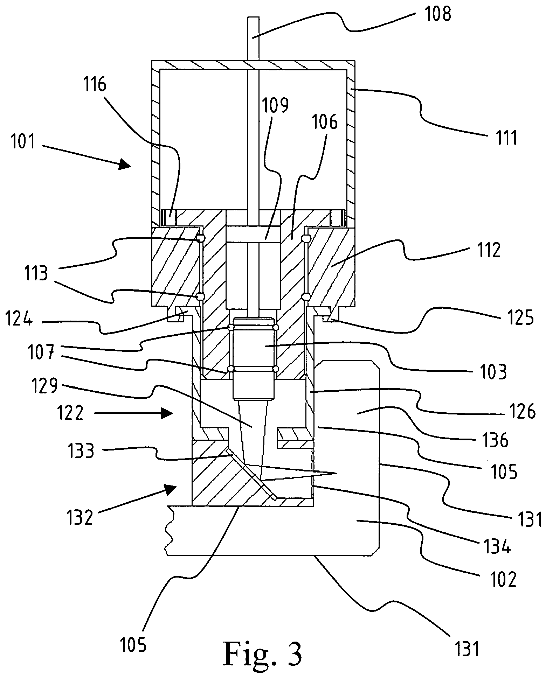

In an alternative embodiment of inspection device 101 (fig. 2) the window 28 is removed and an auxiliary chamber 132 is mounted against wall 127 on the underside of chamber 122. Accommodated in this auxiliary chamber 132 is a mirror 133 with which the direction of the ultrasonic wave beam 129 from transducer 103 can be deflected, in the shown embodiment through a right angle. Auxiliary chamber 132 is provided with its own window 134 which is formed in a side wall 135 thereof. In the shown embodiment the mirror 133 takes a spherical form, whereby it also serves to focus wave beam 129. With this embodiment of device 101 a material 102 having an upright part 136 (fig. 3) can be inspected. This embodiment is generally suitable for performing measurements at locations which are difficult to access, such as in corners or in the vicinity of obstacles. And although auxiliary chamber 132 is described here as a separate component for later mounting, device 101 could also be provided with a single, continuous medium chamber 122 in which a mirror 133 could be accommodated.

The above described inspection device can have a very compact form and is thereby suitable for use as hand tool. The device can thus be used at locations where space is limited, such as for instance between components of car bodywork or in aircraft where materials must be checked at specific locations - for instance at the position of spot welds or rivets. The free surface of the material for inspecting required for placing of the device thereon can be small because the wall with the window, which comes into contact with the materials for inspecting, can be given a small form. Since the control and processing unit is also portable, the entire inspection device can be used on location.

Although the invention is described above on the basis of a number of embodiments, it can be varied in numerous ways. It is also possible to apply more than one sensor, and combinations could be made of different types of sensor. Nor is the movement of the sensor limited to a combination of a circular rotation and a linear translation. Other cyclical movements, such as elliptical movements, can also be envisaged, while the translation movement could also run along a curved path. In addition to the conductive medium in the chamber, use could further also be made of a contact medium between the wall of the chamber in which the window is situated and the material surface. Undesired damping of the ultrasonic waves is hereby limited as much as possible. Finally, it must also be remembered that, where terms such as "top" and "bottom" are used in the text, these must be seen in relation to the shown figures. In reality however, the inspection device according to the invention can be used in any desired position.

The scope of the invention is therefore defined solely by the following claims.

## Claims

1. Device (1;101) for inspecting the interior of a material (2;102), comprising:
at least one sensor (3;103) which comprises an ultrasonic transducer,
means (4;104) for moving the at least one sensor (3;103) at a substantially constant distance along a surface (5;105) of the material (2;102), the moving means (4;104) being adapted to cause the at least one sensor (3;103) to perform a substantially uniform movement along the surface (5;105), and
a chamber (22;122,132) filled with a medium (23;123) which conducts ultrasonic waves well and which is placed between the at least one sensor (3;103) and the surface (5;105),
wherein the chamber (22;122,132) filled with the readily conductive medium (23;123) is arranged to be held immobile on the surface (5;105), and the at least one ultrasonic transducer (3;103) is movable through or along the chamber (22;122,132, and
the moving means (4;104) are adapted to cause the at least one sensor (3;103) to perform a composite movement, i.e. a rotation movement (C) and a translation movement (T), along the surface (5;105), the moving means (4;104) comprising an element (6;106) rotatable about an axis (A), wherein the at least one sensor (3;103) is arranged eccentrically relative to the axis (A), and the moving means (4;104) further comprising a translatable element (12;112) which is mounted slidably on the chamber (22; 122, 132) and in which the rotatable element (6;106) is accommodated.

2. Inspection device (1;101) as claimed in claim 1, **characterized in that** the moving means (4;104) comprise a motor (14;114) which drives the rotatable element (6;106) and/or the translatable element (12;112) via at least one transmission.

3. Inspection device (1;101) as claimed in any of the preceding claims, **characterized in that** the at least one sensor (3;103) is rotatable in the rotatable element (6;106) by means of bearings (7; 107).

4. Inspection device (1;101) as claimed in any of the preceding claims, **characterized in that** at least a wall (27;127,135) of the chamber (22;122,132) to be held on the surface has a window (28,128,134) permeable to ultrasonic waves.

5. Inspection device (1;101) as claimed in claim 4, **characterized in that** the window (28;128,134) is a membrane.

6. Inspection device (101) as claimed in any of the preceding claims, **characterized by** means for deflecting waves transmitted by the at least one ultrasonic transducer (103).

7. Inspection device (101) as claimed in claim 6, **characterized in that** the deflecting means comprise a mirror (133) which is placed in the chamber (122,132) or can be connected thereto.

## Patentansprüche

1. Vorrichtung (1; 101) zur Prüfung des Inneren eines Materials (2; 102), die aufweist:
wenigstens einen Sensor (3; 103), der einen Ultraschallwandler aufweist,
Einrichtungen (4; 104) zum Bewegen des wenigstens einen Sensors (3; 103) in einem im Wesentlichen konstanten Abstand entlang einer Oberfläche (5; 105) des Materials (2; 102), wobei die Bewegungseinrichtungen (4; 104) geeignet sind, zu bewirken, dass der wenigstens eine Sensor (3; 103) eine im Wesentlichen gleichmäßige Bewegung entlang der Oberfläche (5; 105) durchführt, und
eine Kammer (22; 122, 132), die mit einem Medium (23; 123) gefüllt ist, das Ultraschallwellen gut leitet und das zwischen dem wenigstens einen Sensor (3; 103) und der Oberfläche (5; 105) angeordnet ist,
wobei die Kammer (22; 122, 132), die mit dem gut leitfähigen Medium (23; 123) gefüllt ist, derart eingerichtet ist, dass sie auf der Oberfläche (5; 105) unbeweglich gehalten wird, und dass der wenigstens eine Ultraschallwandler (3; 103) durch oder entlang der Kammer (22; 122, 132) beweglich ist, und
die Bewegungseinrichtungen (4; 104) geeignet sind, um zu bewirken, dass der wenigstens eine Sensor (3; 103) eine zusammengesetzte Bewegung, d.h. eine Drehbewegung (C) und eine Verschiebungsbewegung (T) entlang der Oberfläche (5; 105) durchführt, wobei die Bewegungseinrichtungen (4; 104) ein Element (6; 106) aufweisen, das um eine Achse (A) drehbar ist, wobei der wenigstens eine Sensor (3; 103) relativ zu der Achse (A) exzentrisch angeordnet ist, und die Bewegungseinrichtungen (4; 104) ferner ein verschiebbares Element (12; 112) aufweisen, das verschiebbar auf der Kammer (22; 122, 132) montiert ist und in dem das drehbare Element (6; 106) aufgenommen ist.

2. Prüfvorrichtung (1; 101) nach Anspruch 1, **dadurch gekennzeichnet, dass** die Bewegungseinrichtungen (4; 104) einen Motor (14; 114) aufweisen, der das drehbare Element (6; 106) und/oder das verschiebbare Element (12; 112) über wenigstens ein Getriebe antreibt.

3. Prüfvorrichtung (1; 101) nach einem der vorhergehenden Ansprüche, **dadurch gekennzeichnet, dass** der wenigstens eine Sensor (3; 103) mittels Lagern (7; 107) in dem drehbaren Element (6; 106) drehbar ist.

4. Prüfvorrichtung (1; 101) nach einem der vorhergehenden Ansprüche, **dadurch gekennzeichnet, dass** wenigstens eine Wand (27; 127, 135) der Kammer (22; 122, 132), die auf der Oberfläche gehalten werden soll, ein Fenster (28, 128, 134) hat, das für Ultraschallwellen durchlässig ist.

5. Prüfvorrichtung (1; 101) nach Anspruch 4, **dadurch gekennzeichnet, dass** das Fenster (28; 128, 134) eine Membran ist.

6. Prüfvorrichtung (101) nach einem der vorhergehenden Ansprüche, **gekennzeichnet durch** Einrichtungen zum Ablenken von Wellen, die von dem wenigstens einen Ultraschallwandler (103) übertragen werden.

7. Prüfvorrichtung (101) nach Anspruch 6, **dadurch gekennzeichnet, dass** die Ablenkeinrichtungen einen Spiegel (133) aufweisen, der in der Kammer (122, 132) angeordnet ist oder damit verbunden werden kann.

## Revendications

1. Dispositif (1 ; 101) pour inspecter l'intérieur d'un matériau (2 ; 102), comprenant :
au moins un capteur (3 ; 103) qui comprend un transducteur ultrasonore,
des moyens (4 ; 104) pour déplacer l'au moins un capteur (3 ; 103) à une distance sensiblement constante le long d'une surface (5 ; 105) du matériau (2 ; 102), les moyens de déplacement (4 ; 104) étant adaptés pour amener l'au moins un capteur (3 ; 103) à effectuer un mouvement sensiblement uniforme le long de la surface (5 ; 105), et
une chambre (22 ; 122, 132) remplie d'un milieu (23 ; 123) qui conduit bien les ondes ultrasonores et qui est placé entre l'au moins un capteur (3 ; 103) et la surface (5 ; 105),
dans lequel la chambre (22 ; 122, 132) remplie du milieu facilement conducteur (23 ; 123) est agencée de sorte à être maintenue immobile sur la surface (5 ; 105), et l'au moins un transducteur ultrasonore (3 ; 103) est mobile à travers ou le long de la chambre (22 ; 122, 132), et
les moyens de déplacement (4 ; 104) sont adaptés pour amener l'au moins un capteur (3 ; 103) à effectuer un mouvement composite, c'est-à-dire un mouvement de rotation (C) et un mouvement de translation (T), le long de la surface (5 ; 105), les moyens de déplacement (4 ; 104) comprenant un élément (6 ; 106) rotatif autour d'un axe (A), dans lequel l'au moins un capteur (3 ; 103) est agencé de manière excentrique par rapport à l'axe (A), et les moyens de déplacement (4 ; 104) comprenant en outre un élément apte à subir une translation (12 ; 112) qui est monté de manière coulissante sur la chambre (22 ; 122, 132) et dans lequel est accueilli l'élément rotatif (6 ; 106).

2. Dispositif d'inspection (1 ; 101) selon la revendication 1, **caractérisé en ce que** les moyens de déplacement (4 ; 104) comprennent un moteur (14 ; 114) qui entraîne l'élément rotatif (6 ; 106) et/ou l'élément apte à subir une translation (12 ; 112) via au moins une transmission.

3. Dispositif d'inspection (1 ; 101) selon l'une quelconque des revendications précédentes, **caractérisé en ce que** l'au moins un capteur (3 ; 103) est rotatif dans l'élément rotatif (6 ; 106) au moyen de paliers (7 ; 107).

4. Dispositif d'inspection (1 ; 101) selon l'une quelconque des revendications précédentes, **caractérisé en ce qu'**au moins une paroi (27 ; 127, 135) de la chambre (22 ; 122, 132) destinée à être retenue sur la surface présente une fenêtre (28, 128, 134) perméable aux ondes ultrasonores.

5. Dispositif d'inspection (1 ; 101) selon la revendication 4, **caractérisé en ce que** la fenêtre (28 ; 128, 134) est une membrane.

6. Dispositif d'inspection (101) selon l'une quelconque des revendications précédentes, **caractérisé par** des moyens de déviation des ondes transmises par l'au moins un transducteur ultrasonore (103).

7. Dispositif d'inspection (101) selon la revendication 6, **caractérisé en ce que** les moyens de déviation comprennent un miroir (133) qui est placé dans la chambre (122, 132) ou peut être relié à celle-ci.
